# EUROPEAN PATENT SPECIFICATION

(11) **EP 1 069 319 B1**
(45) Date of publication and mention of the grant of the patent: **10.11.2004**
(21) Application number: 00305301.4
(22) Date of filing: 23.06.2000
(51) Int. Cl.: F15B 13/04, F15B 15/28

(54) **Pilot operated directional control valve having position detecting function**
Vorgesteuertes Wegeventil mit Positionsermittlung
Distributeur pneumatique piloté avec détection de la position

(30) Priority: 13.07.1999 JP 19928099
(43) Date of publication of application: 17.01.2001
(73) Proprietor: SMC CORPORATION, Minato-ku, Tokyo (JP)
(72) Inventor: Hayashi, Bunya c/o SMC Corp., Yawara-mura, Tsukuba-gun, Ibaraki (JP); Ishikawa, Makoto c/o SMC Corp., Yawara-mura, Tsukuba-gun, Ibaraki (JP)
(74) Representative: Findlay, Alice Rosemary

(56) References cited:
- GB-A- 2 078 951
- JP-U- 2 066 784
- US-A- 5 331 152
- US-A- 5 502 380
- US-A- 5 819 783
- PATENT ABSTRACTS OF JAPAN vol. 007, no. 081 (M-205), 5 April 1983 (1983-04-05) -& JP 58 008806 A (SEKOH GIKEN), 19 January 1983 (1983-01-19)
- PATENT ABSTRACTS OF JAPAN vol. 011, no. 158 (M-591), 22 May 1987 (1987-05-22) -& JP 61 290287 A (TOYOOKI KOGYO), 20 December 1986 (1986-12-20)

## Description

The present invention relates to a pilot operated directional control valve having a position detecting function in which the detection of operating positions of a valve member such as a spool is improved through the use of light.

A directional control valve capable of detecting the changeover position of a spool by utilising a magnet is well known and is disclosed in, for example, Japanese Unexamined Utility Model Publication No. 2-66784 (Japanese Utility Model Application No. 63-144027 on microfilm). In this directional control valve the changeover position of the spool is detected by mounting a magnet on the spool, mounting a magnetic sensor on a casing, and detecting the magnet moving together with the spool by means of the magnetic sensor.

However, this known directional control valve described in the above-mentioned known document employs a method wherein a magnet is used as an object to be detected, and wherein the magnetism from this magnet is detected by a magnetic sensor, and therefore, the conventional directional control valve is susceptible to an external magnetic field. For example, with a welder in which a large current flows or where a large-sized motor is used, the magnetic sensor can malfunction due to the external magnetic field generated by electrical current. This makes it difficult to maintain a given detecting accuracy, and has created a reliability problem.

The above-mentioned document does propose detecting the changeover position of a spool using an optical sensor. With this method positions of the spool can be detected without being affected by an external magnetic field but the document does not show any specific construction for embodying this proposal.

U.S. 5819783 disclosed a 3-way valve with an optical sensor for detecting the spool position. The optical sensor emits light towards the spool or a piston for moving the spool and a detector is provided for detecting light reflected off the target.

In accordance with the present invention there is provided a pilot operated control valve having a position detecting function, comprising a casing formed with a plurality of ports and a valve hole into which each of the ports is opened, a valve member for changing over flow passages between the ports, the valve member being slidably received in the valve hole, a piston chamber formed at at least one end of the valve member, a piston slidably received in the piston chamber, the piston being operative in response to pilot fluid pressure to change over the valve member, a pilot valve for supplying the piston with a pilot fluid, a through hole formed in the casing and an optical sensor disposed so as to project light through the through hole and to receive reflected light through the through hole the quantity of which depends on the position of the piston, the optical sensor detecting operating positions of the piston according to the reflected light received thereby, characterised in that the valve is a directional control valve and further comprises a breathing chamber opened to the exterior and disposed in the casing between the valve member and the piston, an object to be detected which protrudes parallel with the axis of the piston disposed on an end face of the piston adjacent to the breathing chamber, and a recess for receiving the object to be detected, the recess being provided in the casing in a wall surface of the breathing chamber and the through hole being formed at a position facing the recess, whereby operating positions of the object in the recess) can be detected.

In the directional control valve having the above-described features, when the piston is supplied with a pilot fluid by the pilot valve, the pilot fluid pressure causes the piston to change over the valve member. At this time, through the through hole of the casing, the projection of light to the piston and the reception of the reflected light is performed by the optical sensor, and thereby operating positions of the piston, or of the valve member, are detected in response to the change in quantity of received light.

Thus, in accordance with the present invention, it is possible to detect positions of a valve member using an optical sensor and thus without being affected by external magnetic field. In addition, since the directional control valve is constituted so that movement of the valve member is not directly detected but rather indirectly by detecting the piston, the structure of a detecting mechanism becomes simpler. If the directional control valve were constituted to directly detect a valve member, the through hole would have to be formed at a place at which the valve member inside the valve hole can be seen therethrough so that light could be projected and received relative to the valve member. However, since such a place corresponds to a portion of the casing directly facing a hydraulic fluid passage, it would be necessary to form the through hole and install the optical sensor in such a way as not to cause leakage of fluid. This would make the structure complicated and machining difficult. However by providing the through hole at a portion of the casing where light can be projected and received relative to the piston through the through hole, it is possible to install the detecting mechanism at a place independent passages for hydraulic fluid. This eliminates the necessity for structure to prevent hydraulic fluid leakage.

The piston can reliably be detected via the object to be detected. In addition, even if the optical sensor is made to directly face the object to be detected by making the through hole opened to the recess, there is no need to worry about a hydraulic fluid or a pilot fluid leaking through this through hole, since the recess is formed within the breathing chamber.

Another advantage is that the ease of maintenance is increased by disposing the optical sensor at a predetermined position on a casing of the directional control valve.

In accordance with a preferred embodiment, the object to be detected has an annular shape of the same diameter as that of the piston, and the recess has an annular shape of the same diameter as that of the piston chamber.

The invention will now be further described by way of example with reference to the accompanying drawings in which:
Fig. 1 is a longitudinal sectional view of a first embodiment of the directional control valve in accordance with the present invention.
Fig. 2 is an enlarged view showing a main section of Fig. 1.
Fig. 3 is a longitudinal sectional view showing the main section of a second embodiment of the directional control valve in accordance with the present invention.

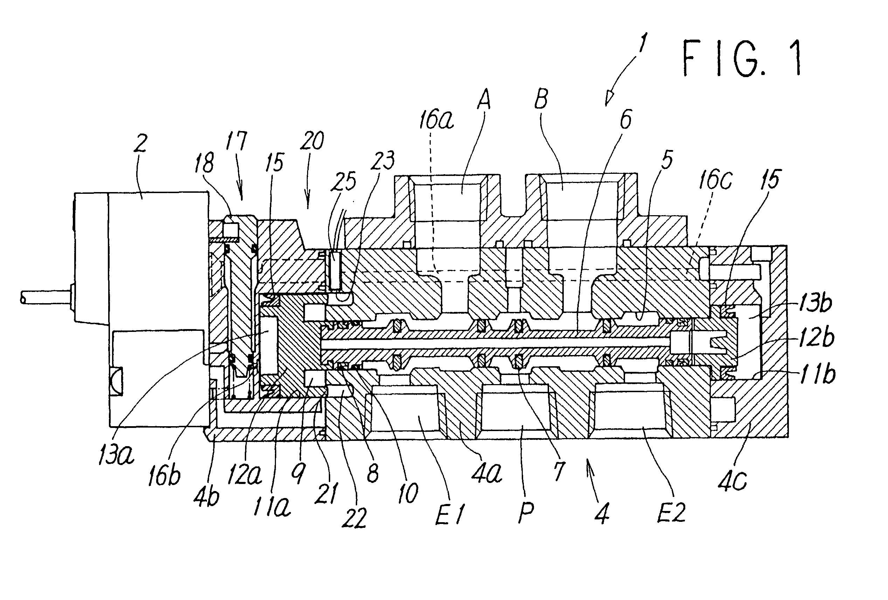

Fig. 1 shows the first embodiment of the directional control valve in accordance with the present invention. The directional control valve here exemplified is a single-pilot operated directional control valve wherein a main valve 1 is changed over by one pilot valve 2.

The main valve 1 has a construction as a 5-port valve, and includes a casing 4. The casing 4 comprises a first member 4a of cuboid shape, a second member 4b which is connected to one end of the first member 4a and which also serves as an adapter for mounting the pilot valve 2, and a third member 4c which is connected to the other end of the first member 4a and which functions as an end cover.

A supply port P and two discharge ports E1 and E2 are provided on either of the upper and lower surfaces of the first member 4a, and two output ports A and B are provided on the other surface. Inside the first member 4a, there is provided a valve hole 5 to which these ports are each opened being arranged in the axial direction. In the valve hole 5, there is slidably received a spool 6 which is a valve member for changing over flow passages.

On the outer periphery of the spool 6, there are provided a plurality of sealing members 7 for mutually defining flow passages connecting the ports, and on the outer periphery of each of both end portions of the spool 6, there are provided respective end sealing members 8 for shutting off the breathing chambers 9 facing the end of the spool 6, from the passages of the hydraulic fluid in the valve hole 5. Reference numeral 10 in Fig. 1 denotes a guide ring for stabilizing the sliding of the spool 6.

On the other hand, in the second member 4b and the third member 4c, the piston chambers 11a and 11b are formed respectively, at positions facing both ends of the spool 6. A first piston chamber 11a formed in the second member 4b has a large diameter, and a first piston 12a of large diameter is slidably received in the first piston chamber 11a, while a second piston chamber 11b formed in the third member 4c has a smaller diameter than the first piston chamber 11a, and a second piston 12b of small diameter is slidably received in the second piston chamber 11b. These pistons 12a and 12b are unitarily coupled to the spool 6 as represented by the first piston 12a, or abutted against the end faces of the spool 6 as represented by the second piston 12b, respectively, and thereby the pistons 12a and 12b move in synchronization with the spool 6.

First and second pressure chambers 13a and 13b are formed on the back sides of the pistons 12a and 12b, that is, on the opposite sides of the piston surfaces abutting against the spool 6, respectively. Between the pistons 12a and 12b, and the spool 6, there are formed the breathing chambers 9 and 9 which are opened to the outside, respectively. The pressure chambers 13a and 13b are hermetically shut off from the breathing chambers 9 and 9 by piston packing 15 and 15 mounted on the outer peripheries of the pistons 12a and 12b, respectively.

The first pressure chamber 13a situated adjacently to the first piston 12a of large diameter communicates with the supply port P through the pilot fluid passages 16a and 16b via a manual operating mechanism 17 and the above-mentioned pilot valve 2, while the second pressure chamber 13b situated adjacently to the second piston 12b of small diameter always communicates with the supply port P through the pilot fluid passage 16c.

When the pilot valve 2 is in the "off" state, that is, when the first pressure chamber 13a is not supplied with the pilot fluid, the second piston 12b is pushed by the pilot fluid pressure supplied to the second pressure chamber 13b, so that the spool 6 is situated at the first changeover position shifted to the left side, as shown in Fig. 1. Once the pilot valve 2 is turned "on", that is, the first pressure chamber 13a is supplied with the pilot fluid, the spool 6 is pushed by the first piston 12a, so that the spool 6 moves to the right side and occupies the second changeover position. This is because the acting force of the fluid pressure acting on the first piston 12a is larger than that acting on the second piston 12b due to the difference in pressure receiving area between the two pistons 12a and 12b.

The above-mentioned manual operating mechanism 17 is adapted to directly connect the pilot fluid passages 16a and 16b by depressing an operating element 17a, and thereby to make the first pressure chamber 13a communicate with the supply port P. This operating state is the same as that in the case where the pilot valve 2 is "on".

Here, the above-mentioned pilot valve 2 is an electromagnetically operated solenoid valve for opening/closing pilot fluid passages by energizing the solenoid. Since the constitution and operation of the pilot valve 2 are the same as the known one, specific explanation thereof is omitted.

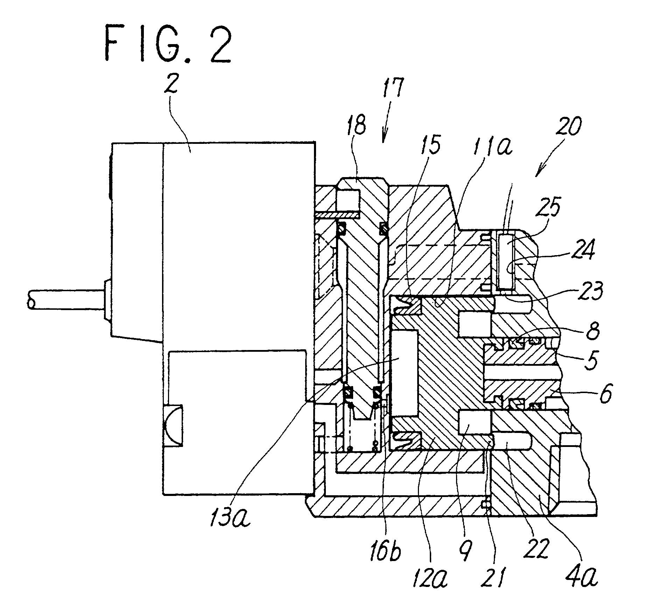

The above-described directional control valve is provided with a position detecting mechanism 20 for detecting operating positions of the spool 6 via any one of the pistons (exemplified in drawings is the first piston 12a). As shown in Fig. 2, the position detecting mechanism 20 comprises the object to be detected 21 formed on the end face adjacent to the breathing chamber 9, of the first piston 12a, the recess 22 in which the object to be detected 21 is fit and which is formed in the wall surface of the breathing chamber 9 in the first portion 4a of the casing 4, the through hole 23 and the optical sensor housing 24 formed so as to be opened to a portion of the side wall of the recess 22, and the optical sensor 25 disposed in the housing 24. The optical sensor 25 has the function of projecting light into the recess 22 through the through hole 23, and also has the function of receiving the reflected light from the object to be detected 21. Here, the through hole 23 may be fit over with a transparent material such as glass or synthetic resin.

The object to be detected 21 has annular shape with the same diameter as that of the first piston 12a, and is formed so as to protrude from an end face of the piston parallel and coaxially with the axis of the spool 6. On the other hand, the recess 22 is formed into annular shape with the same diameter as that of the piston chamber 11a. If the piston 12a is moved to the first changeover position shown in Figs. 1 and 2, the object to be detected 21 occupies a undetectable position that is deviated from the through hole 23, and if the piston 12a is moved to the second changeover position opposite to the first changeover position, the object to be detected 21 occupies the detectable position which covers the through hole 23. When the object to be detected 21 is located at a undetectable position, since the reflected light from the object to be detected 21 is not received by the optical sensor 25, the optical sensor 25 is in the "off" state, and no detection signal is outputted. On the other hand, when the object to be detected 21 is located at the detectable position, since the reflected light from the object to be detected 21 is received by the optical sensor 25, the optical sensor 25 turns "on", and a detection signal is outputted. Thus, by detecting the presence/absence of the object to be detected 21 using the optical sensor 25, it is possible to detect operating positions of the spool 6 via the piston 12a. Here, the object to be detected 21 may additionally have a light reflecting plate.

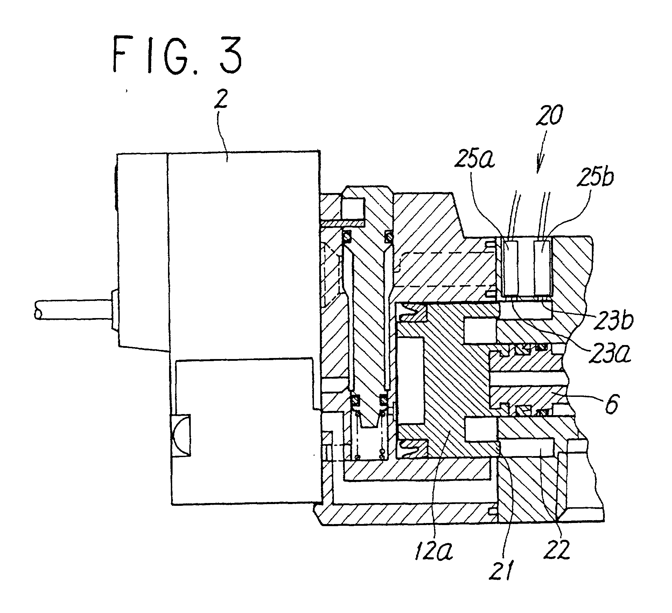

In a second embodiment shown in Fig. 3 through holes 23a and 23b, and optical sensors 25a and 25b are installed at the two spots on the inlet side and the bottom side of the recess 22. In the case where the object to be detected 21 is moved from the first changeover position to the second changeover position as shown in drawings, the first optical sensor 25a situated on the inlet side detects the startup of the piston 12a by turning on upon detecting the reflected light, and the second optical sensor 25b situated on the bottom side detects the arrival at the stroke end, of the piston 12a when turning on upon detecting the reflected light. Conversely, in the case where the object to be detected 21 is returned from the second changeover position to the first changeover position, the second optical sensor 25b situated on the bottom side detects the startup of the piston 12a by turning off, and the first optical sensor 25a situated on the inlet side detects the arrival at the return stroke end, of the piston 12a when turning off.

Thus, in accordance with the above-described directional control valve, use of the optical sensors 25, 25a , and 25b permits the detection of positions of the spool 6 without being effected by external magnetic field. In addition, the present embodiment is constituted so as not to directly detect the movement of the spool by the optical sensor 25, 25a, and 25b, but to indirectly detect positions of the spool by detecting the piston, so that a position detecting mechanism 20 can be built into a place independent of flow passages of the hydraulic fluid. This simplifies the installation structure of the position detecting mechanism.

Furthermore, since the present embodiment is constituted so as to detect the movement of the piston 12a via the object to be detected 21 formed on the piston 12a, it is possible to reliably detect the piston 12a via the object to be detected 21, even if the body portion of the piston 12a can not be directly detected because an installation site for the optical sensors 25, 25a, and 25b can not be secured around the piston chamber 11a. In addition, even if the optical sensor 25, 25a, and 25b are made to directly face the object to be detected 21 by making the through hole 23, 23a, and 23b opened to the recess 22, there is no need to worry about the hydraulic fluid or the pilot fluid leaking through the through hole 23, since the recess 22 is formed within the breathing chamber 9.

Moreover, the optical sensors 25, 25a and 25b may be connected to a discriminating circuit (not shown), with the discriminating circuit discriminates whether the changeover operation of the piston 12a (and consequently spool 6) is normal or not, based on detection signals from the optical sensors 25, 25a and 25b. In this case, in the discriminating circuit, the relations between the operating time and the operating position when the spool 6 normally operates, and the range of the operating time to be judged as an abnormal operation, etc. have been inputted in advance. The discriminating circuit is constituted so as to discriminate whether the changeover operation of the spool 6 is normal or not, by comparing the signals from the optical sensors 25, 25a, and 25b with the above-mentioned input data. Thereby, it is possible to predict a sign of failure beforehand and to take precautionary measures against it, thereby avoiding an situation such that the operation of device stops for a long time due to the occurrence of a failure or an accident.

In the above-described first embodiment, as a single-pilot type directional control valve, there was shown a directional control valve having two pistons 12a and 12b, large and small. However, it goes without saying that the directional control valve may be of the spring-return type which has a return spring in place of the second piston 12b of small diameter, and which always energizes the spool 6 in the return direction by the energizing force of the return spring.

Also, the above-described directional control valve may be a double-pilot type valve having two pistons and two pilot valves.

As have been described hereinbefore in detail, in accordance with the present invention, there is provided a simply constructed pilot operated directional control valve having a position detecting function, capable of detecting, through the use of light sensors, operating positions of a valve member such as a spool.

## Claims

1. A pilot operated directional control valve having a position detecting function, comprising a casing (4) formed with a plurality of ports (P, E1, E2. A, B) and a valve hole (5) into which each of the ports is opened, a valve member (6) for changing over flow passages between the ports, the valve member being slidably received in the valve hole, a piston chamber (11a) formed at at least one end of the valve member, a piston (12a) slidably received in the piston chamber, the piston being operative in response to pilot fluid pressure to change over the valve member, a pilot valve (2) for supplying the piston with a pilot fluid, a through hole (23, 23a, 23b) formed in the casing and an optical sensor (25, 25a, 25b) disposed so as to project light through the through hole and to receive reflected light through the through hole the quantity of which depends on the position of the piston (12a), the optical sensor detecting operating positions of the piston according to the reflected light received thereby, **characterised in that** the valve is a directional control valve and further comprises a breathing chamber (9) opened to the exterior and disposed in the casing (4) between the valve member (6) and the piston (12a), an object (21) to be detected which protrudes parallel with the axis of the piston (12a) disposed on an end face of the piston adjacent to the breathing chamber (9), and a recess (22) for receiving the object (21) to be detected, the recess (22) being provided in the casing (4) in a wall surface of the breathing chamber (9) and the through hole (23, 23a, 23b) being formed at a position facing the recess, whereby operating positions of the object (21) in the recess (22) can be detected.

2. A directional control valve as claimed in Claim 1, wherein the object to be detected is an annular ring (21) having the same diameter as that of the piston (12a), and wherein the recess (22) is an annular ring having the same diameter as that of the piston chamber (11a).

3. A directional control valve as claimed in either Claim 1 or Claim 2, wherein the piston (12a) having the object (21) to be detected is unitarily coupled to the valve member (6).

4. A directional control valve as claimed in any preceding claim, wherein a reflecting plate for reflecting light is installed on the object (21) to be detected.

## Patentansprüche

1. Vorgesteuertes Wegeventil mit Positionsermittlung, welches ein mit einer Mehrzahl von Steueröffnungen (P, E1, E2, A, B) und einer Ventilöffnung (5), in welche jede einzelne Steueröffnung einmündet, geformtes Gehäuse (4), einen in der Ventilöffnung verschiebbar angebrachten Ventilkörper (6) zur Umschaltung des Flusses zwischen den Steueröffnungen, eine Kolbenkammer (11 a) an zumindest einem Ende des Ventilkörpers, einen in der Kolbenkammer verschiebbar angebrachten Kolben (12a), wobei der Kolben auf den Steuerflüssigkeitsdruck reagiert und den Ventilkörper verschiebt, ein Steuerventil (2) zur Versorgung des Kolbens mit Steuerflüssigkeit, ein im Gehäuse geformtes Querloch (23, 23a, 23b) und einen optischen Sensor (25, 25a, 25b) umfasst, welcher so angeordnet ist, dass er durch das Querloch hindurch einen Lichtstrahl projiziert und das reflektierte Licht wieder empfängt, wobei die Menge des dabei wieder empfangenen Lichts von der Position des Kolbens (12a) abhängt und der optische Sensor somit anhand des reflektierten Lichts die jeweilige Arbeitsposition des Kolbens ermittelt, **dadurch gekennzeichnet, dass** das Ventil als Wegesteuerventil ausgebildet ist und darüber hinaus eine Betuftungskammer (9), welche nach außen hin offen ist und im Gehäuse (4) zwischen Ventilkörper (6) und Kolben (12a) angeordnet ist, einen zu ermittelnden Gegenstand (21), welcher parallel zur Achse des Kolbens (12a) hervorsteht und neben der Lufteinlasskammer (9) an der Stirnfläche des Kolbens angeordnet ist, und eine Ausnehmung (22) zur Aufnahme des zu ermittelnden Gegenstands (21) umfasst, wobei die Ausnehmung (22) im Gehäuse (4) in einer Wandfläche der Belüftungskammer (9) angebracht ist und das Querloch (23, 23a, 23b) an einer Stelle gegenüber von der Ausnehmung geformt ist, wodurch die jeweilige Arbeitsposition des Gegenstands (21) innerhalb der Ausnehmung (22) ermittelt werden kann.

2. Wegesteuerventil nach Anspruch 1, wobei der zu ermittelnde Gegenstand (21) ringförmig ist und denselben Durchmesser aufweist wie der Kolben (12a) und die Ausnehmung (22) ebenfalls ringförmig ist und denselben Durchmesser aufweist wie die Kolbenkammer (11a).

3. Wegesteuerventil nach Anspruch 1 oder 2, wobei der Kolben (12a) samt dem zu ermittelnden Gegenstand (21) und der Ventilkörper (6) zu einer Einheit gekoppelt sind.

4. Wegesteuerventil nach einem der vorhergehenden Ansprüche, wobei der zu ermittelnde Gegenstand (21) mit einer Platte zur Reflektion des Lichts versehen wird.

## Revendications

1. Vanne de commande directionnelle actionnée par pilote ayant une fonction de détection de position, comprenant un corps (4) ayant une pluralité d'orifices (P, E1, E2, A, B) et un trou de vanne (5) dans lequel chacun des orifices est ouvert, un élément de vanne (6) pour commuter les passages d'écoulement entre les orifices, l'élément de vanne étant reçu de manière coulissante dans le trou de vanne, une chambre de piston (11a) formée dans au moins une extrémité de l'élément de vanne, un piston (12a) reçu de manière coulissante dans la chambre de piston, le piston (12a) étant actionné sous l'effet de la pression de fluide pilote pour faire déplacer l'élément de vanne, une vanne pilote (2) pour alimenter le piston en fluide pilote, un trou traversant (23, 23a, 23b) formé dans le corps et un capteur optique (25, 25a, 25b) disposé de manière à projeter une lumière par le trou traversant et à recevoir par le trou traversant la lumière reflétée dont la quantité dépend de la position du piston (12a), le capteur optique détectant les positions de fonctionnement du piston en fonction de la lumière reflétée reçue par lui, **caractérisée en ce que** la vanne est une vanne de commande directionnelle et comprend en outre une chambre de respiration (9) ouverte à l'extérieur et disposée dans le corps (4) entre l'élément de vanne (6) et le piston (12a), un objet (21) à détecter qui dépasse parallèlement à l'axe du piston (12a) étant disposé sur une face d'extrémité du piston contiguë à la chambre de respiration (9), et un évidement (22) pour recevoir l'objet (21) à détecter, l'évidement (22) étant prévu dans le corps (4) dans une surface de paroi de la chambre de respiration (9) et le trou traversant (23, 23a, 23b) étant formé à une position faisant face à l'évidement, grâce à quoi les positions de fonctionnement de l'objet (21) situé dans l'évidement (22) peuvent être détectées.

2. Vanne de commande directionnelle selon la revendication 1, dans laquelle l'objet à détecter est une bague annulaire (21) ayant le même diamètre que celui du piston (12a), et dans laquelle l'évidement (22) est une bague annulaire ayant le même diamètre que celui de la chambre de piston (11a).

3. Vanne de commande directionnelle selon la revendication 1 ou la revendication 2, dans laquelle le piston (12a) ayant l'objet (21) à détecter est couplé de manière monobloc à l'élément de vanne (6).

4. Vanne de commande directionnelle selon l'une quelconque des revendications précédentes, dans laquelle une plaque réfléchissante est montée sur l'objet (21) à détecter pour réfléchir la lumière.
